# FASCICULE DE BREVET EUROPEEN

(11) **EP 1 107 413 B1**
(45) Date de publication et mention de la délivrance du brevet: **08.04.2009**
(21) Numéro de dépôt: 00420235.4
(22) Date de dépôt: 14.11.2000
(51) Int. Cl.: H02G 3/32

(54) **Procédé d'assemblage d'un chemin de câbles et ensemble de tronçons allongés formant un tel chemin de câbles**
Verfahren zur Montage eines Kabelkanals und Zusammenbau von ihn erzeugenden langgestreckten Kabelkanal-Elementen
Method for assembling a cableduct and elongated elements assembly forming such a cableduct

(30) Priorité: 24.11.1999 FR 9914802
(43) Date de publication de la demande: 13.06.2001
(73) Titulaire: Gewiss France SAS, 21430 Liernais (FR)
(72) Inventeur: Simon, Bernard, 69300 Caluire (FR)
(74) Mandataire: Myon, Gérard Jean-Pierre

(56) Documents cités:
- FR-A- 2 416 577
- FR-A- 2 437 719
- FR-A- 2 638 808
- FR-A- 2 686 142
- FR-A- 2 758 419

## Description

L'invention a trait à un procédé d'assemblage d'un chemin de câbles et à un ensemble de tronçons allongés formant un tel chemin de câbles.

Il est connu de réaliser un chemin de câbles au moyen de plusieurs tronçons allongés présentant une section transversale globalement en forme de U et formant des logements de réception de câbles, ces tronçons étant supportés par des consoles fixées sur les murs ou au plafond de locaux équipés du chemin de câbles. Il est connu d'utiliser des boulons ou des pattes parfois dénommés "crapauds" pour fixer les tronçons allongés sur les consoles. Ceci nécessite une mise en place précise de ces boulons et/ou pattes sur ces consoles et leur réglage sur le site d'installation, ce qui n'est pas toujours aisé pour un opérateur susceptible de travailler en hauteur, dans une position inconfortable.

Les documents FR-A-2 638 808, FR-A-2 416 577 et FR-A-2 758 419 illustrent l'art antérieur.

C'est à ces inconvénients qu'entend plus particulièrement remédier l'invention en proposant un procédé d'assemblage qui ne nécessite pas de réglage des moyens d'immobilisation d'un tronçon sur une console et qui peut être mis en oeuvre aisément par un opérateur.

Dans cet esprit, l'invention concerne un procédé d'assemblage d'un chemin de câbles comprenant au moins un tronçon allongé de réception de câbles qui présente une section transversale globalement en forme de U et au moins une console de support de ce tronçon, caractérisé en ce qu'il consiste à introduire le tronçon dans au moins un étrier élastique, globalement en forme de U et solidaire de la console, en appuyant un bord de ce tronçon sur une branche de cet étrier, et à faire pivoter ce tronçon autour de sa zone d'appui sur l'étrier dans un sens de rapprochement du fond du tronçon par rapport à la base de l'étrier.

Grâce au procédé de l'invention, le caractère élastique de l'étrier en forme de U permet de mettre en place et d'immobiliser, par coopération de formes, le tronçon allongé dans l'étrier, sans nécessiter de réglage ou d'ajustement. Les mouvements successifs d'introduction et de rotation permettent un prépositionnement du tronçon par rapport à l'étrier puis une introduction en force du tronçon dans l'étrier.

Selon des aspects avantageux mais non obligatoires de l'invention, le procédé incorpore une ou plusieurs des caractéristiques suivantes :
- Il consiste à déformer élastiquement l'étrier, en écartant ses branches, par l'introduction et la mise en place du tronçon. Cette déformation élastique assure qu'un effort de pincement est ensuite exercé par l'étrier sur le tronçon, ce qui contribue à une immobilisation ferme du tronçon.
- Il consiste à coiffer le tronçon avec un couvercle en recouvrant les bords longitudinaux libres du tronçon et les extrémités libres des branches de l'étrier, avec les bords longitudinaux du couvercle. Cet aspect de l'invention permet la mise en place d'un couvercle sur la totalité de la longueur d'un chemin de câbles, y compris au niveau des consoles et des étriers de support, ce qui représente un progrès sensible par rapport aux dispositifs connus dans lesquels des moyens de fixation des tronçons sur les consoles empêchent généralement la mise en place d'un couvercle.
- Il consiste à raccorder bout-à-bout deux tronçons allongés en disposant des éclisses de liaison à l'intérieur de ces tronçons.

L'invention concerne également un ensemble de tronçons allongés formant chemin de câbles, ces tronçons présentant en section transversale globalement une forme de U alors que cet ensemble comprend au moins une console de support d'au moins un tel tronçon. Cet ensemble est caractérisé en ce que la console supporte un étrier élastique globalement en forme de U, de section interne adaptée à la section transversale externe d'un tronçon, cet étrier étant apte à recevoir et à immobiliser, par coopération de formes, ce tronçon en se déformant élastiquement grâce à un écartement de ses branches. Cet ensemble est également caractérisé en ce que l'étrier forme une zone d'articulation d'un tronçon lors de sa mise en place dans l'étrier, cette zone étant engagée dans un bord rabattu d'un côté du tronçon.

Grâce à l'invention, le chemin de câbles peut être monté de façon simple et rapide, alors qu'il est particulièrement solide.

Selon des aspects avantageux mais non obligatoires de l'invention, l'assemblage incorpore une ou plusieurs des caractéristiques suivantes :
- Des branches de l'étrier sont pourvues d'extrémités présentant une zone de courbure vers l'intérieur de l'étrier, alors que les bords longitudinaux libres du tronçon présentent une zone de courbure vers l'intérieur du tronçon. Grâce à cet aspect de l'invention, les extrémités de l'étrier et les bords libres du tronçon coopèrent pour un maintien efficace du tronçon à l'intérieur de l'étrier. Dans ce cas, on peut prévoir que les extrémités des branches de l'étrier sont convexes par rapport au volume défini entre elles. Les parties convexes de ces extrémités permettent de créer des zones d'appui élastique contre les côtés du tronçon en cours d'introduction et une fois mis en place dans l'étrier.
- Au moins un bord longitudinal libre du tronçon est rabattu vers l'extérieur et forme une zone de réception et d'appui élastique d'une extrémité d'une branche de l'étrier.
- Un couvercle est prévu dont les bords longitudinaux coiffent les bords longitudinaux libres du tronçon et les extrémités des branches de l'étrier, les bords longitudinaux du couvercle étant en appui élastique contre ces extrémités. Grâce à cet aspect de l'invention, la fonction de protection obtenue grâce à ce couvercle n'est pas interrompue au niveau des consoles de support de chemin de câbles.
- Des éclisses de liaison bout-à-bout de tronçons allongés sont aptes à être disposées à l'intérieur des deux tronçons et comprennent chacune un bord rabattu apte à coiffer un bord longitudinal libre de chacun des deux tronçons. Ces éclisses contribuent à un positionnement relatif efficace des tronçons mis bout-à-bout.

L'invention sera mieux comprise et d'autres avantages de celle-ci apparaîtront plus clairement à la lumière de la description qui va suivre d'un ensemble de tronçons allongés formant chemin de câbles et de son procédé de montage, donnée uniquement à titre d'exemple et faite en référence aux dessins annexés dans lesquels :

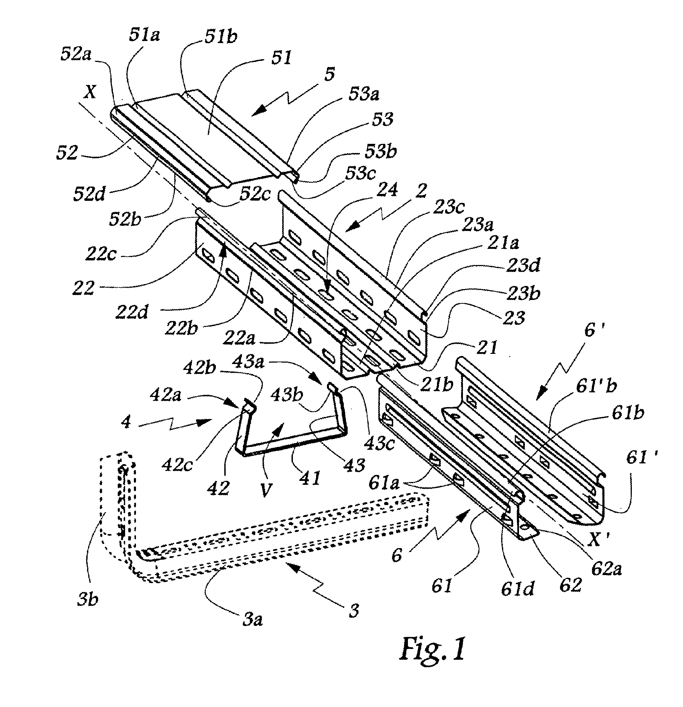

- La figure 1 est une vue en perspective éclatée de certains éléments constitutifs essentiels d'un ensemble formant chemin de câbles conforme à l'invention ;
- La figure 2 est une représentation schématique de principe d'une première étape d'un procédé d'assemblage du chemin de câbles de la figure 1 ;
- La figure 3 est une vue analogue à la figure 2 pour une seconde étape du procédé d'assemblage ;
- La figure 4 est une vue analogue à la figure 2 pour une troisième étape du procédé d'assemblage ;
- La figure 5 est une vue analogue à la figure 2 pour une quatrième étape du procédé d'assemblage ;
- La figure 6 est une vue partielle en perspective, avec arrachements partiels du couvercle, d'un chemin de câbles assemblé après l'étape de la figure 5 ;
- La figure 7 est une coupe selon la ligne VII-VII à la figure 6 ;
- La figure 8 est une vue à plus grande échelle du détail VIII à la figure 7 et
- La figure 9 est une vue à plus grande échelle du détail IX à la figure 7.

L'ensemble 1 formant chemin de câbles représenté sur les figures comprend plusieurs tronçons allongés 2 analogues, la longueur de chacun de ces tronçons étant adaptée à la configuration souhaitée du chemin de câbles. Chaque tronçon 2 s'étend selon une direction principale X-X' et présente, en coupe transversale, c'est-à-dire perpendiculairement à la direction X-X', un profil globalement en forme de U, dont la base est constituée par le fond 21 du tronçon 2 et les branches par les côtés 22 et 23 de ce tronçon. Le fond 21 comporte deux nervures longitudinales 21a et 21b s'étendant vers l'intérieur du tronçon 2.

Le bord supérieur 22a du côté 22 constitue un bord longitudinal libre du tronçon 2 et comprend une première partie 22b, inclinée vers l'intérieur du tronçon 2 par rapport à la surface principale du côté 22, et un bord rabattu 22c s'étendant vers l'extérieur du tronçon 2 à partir de la partie 22b. Les éléments 22b et 22c définissent entre eux un volume allongé 22d au voisinage du bord 22a.

De la même façon, le bord longitudinal libre 23a du côté 23 est formé par une partie inclinée 23b vers l'intérieur et un bord rabattu 23c définissant entre eux un volume allongé 23d.

Le tronçon 2 est pourvu de plusieurs ouvertures ou lumières 24 qui en font un tronçon dit "perforé". Cependant, l'invention est également applicable avec un ou plusieurs tronçons pleins, c'est-à-dire dépourvus d'ouverture équivalentes aux ouvertures 24.

Les tronçons 2 de l'ensemble 1 sont supportés par des consoles 3 réparties sur la longueur du chemin de câbles et prévues pour être fixées sur un mur non représenté. Chaque console 3 est équipée d'un étrier 4 globalement en forme de U et comprenant une base 41 et deux branches 42 et 43 légèrement convergentes à partir de la base 1. L'étrier 4 est fixé sur la console 3 par tout moyen approprié et, par exemple, par soudage. L'étrier 4 est fixé sur la partie horizontale 3a de la console 3 à distance de sa partie verticale 3b, de telle sorte que cette partie verticale ne risque pas d'interférer avec un éventuel mouvement de l'une des branches 42 ou 43.

L'extrémité 42a de la branche 42 d'un étrier 4 comprend une zone 42b de courbure en direction de la patte 43 puis une zone 42c de courbure en sens inverse, de telle sorte que l'extrémité 42a est bombée et convexe par rapport au volume V défini entre les pattes 42 et 43.

De la même manière, l'extrémité 43a de la branche 43 est bombée et convexe et comprend deux zones 43b et 43c de courbure de la patte 43 selon deux directions opposées.

L'étrier 4 est réalisé en métal et, plus spécifiquement en acier à ressort. Il pourrait être réalisé dans un autre matériau, par exemple en matière plastique.

Un couvercle 5 est prévu pour recouvrir le tronçon 2 et comprend une partie principale 51 bordée par deux bords longitudinaux 52 et 53. La partie 51 est pourvue de nervures longitudinales 51a et 51b permettant de la rigidifier. Le bord 52 comprend une première surface 52a, inclinée par rapport à la partie principale 51 et une seconde surface 52b, inclinée par rapport à la surface 52a, la surface 52b étant orientée en direction du bord 53 par rapport à la surface 52a. La surface 52b est doublée par une surface 52c rabattue en direction de l'arête de jonction 52d entre les surfaces 52a et 52b. Compte tenu de l'orientation relative des surfaces 52a et 52b, le bord 52 est concave en direction du bord 53. De la même manière, le bord 53 est formé par trois surfaces 53a, 53b et 53c, les surfaces 53a et 53b étant jointives selon une arête 53d. Les surfaces 53a et 53b sont inclinées l'une par rapport à l'autre et par rapport à la partie principale 51, de telle sorte que le bord 53 est concave en direction du bord 52, la surface 53c doublant la surface 53d sur la longueur du couvercle 5.

Deux éclisses 6 et 6' sont prévues et ont une forme adaptée pour être plaquées à l'intérieur du tronçon 2. L'éclisse 6 comprend une surface principale 61 destinée à être plaquée contre la surface interne du côté 22, la surface 61 étant pourvue de crevées 61a déformées vers l'extérieur et aptes à pénétrer dans certaines des ouvertures 24 du tronçon 2.

L'éclisse 6 comprend également une surface de base 62 prévue pour reposer contre le fond 21 du tronçon 2 et bordée par une languette 62a apte à venir en appui contre la nervure 21a, de telle sorte que l'éclisse 6 est fermement maintenue en appui contre le bord 22.

Le bord supérieur 61b de la surface 61 présente une partie 61c inclinée en direction de la surface 62 et un bord rabattu 61d, incliné vers l'extérieur. Le bord 61b est ainsi apte à recouvrir le bord 22a du côté 22 lorsque l'éclisse est en place dans le tronçon 2.

De la même façon, le bord 61'b de la surface principale 61' de l'éclisse 6' est prévu pour recouvrir le bord supérieur 23a du côté 23 du tronçon 2.

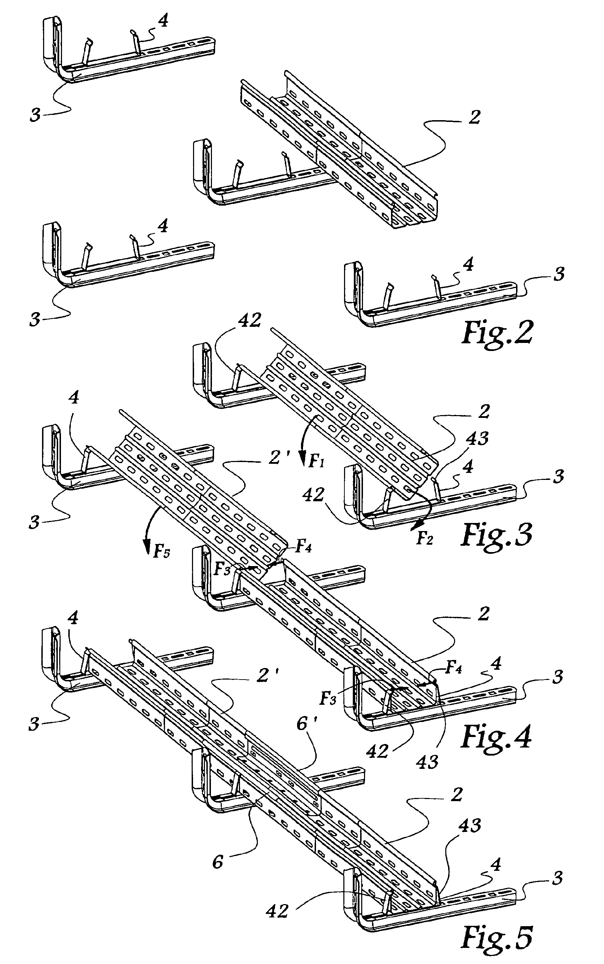

Le procédé d'assemblage de l'ensemble 1 peut être explicité en référence aux figures 2 à 6.

Dans une première étape, le tronçon 2 est approché au-dessus de consoles 3 équipées d'étriers 4, comme représenté à la figure 2. Il est ensuite introduit dans les étriers 4 comme représenté par la flèche F₁ à la figure 3, le bord 22a du tronçon 2 étant en appui sur les extrémités 42a des branches 42 des étriers. Le tronçon 2 subit alors un mouvement de pivotement autour des extrémités 42a, comme représenté par la flèche F₂ à la figure 3, la zone de jonction entre le fond 21 et le côté 23 venant alors en appui contre les extrémités 43a des branches 43 des étriers 4, ce qui conduit à une ouverture élastique des branches des étriers. On rapproche alors le fond 21 du tronçon 2 par rapport à la base 41 de chaque étrier et à la console 3 correspondante pour atteindre la position représentée à la figure 4 où le tronçon 2 est fermement maintenu en position grâce à un effort de pincement élastique, représenté par les flèche F₃ et F₄ à la figure 4.

Comme les étriers 4 sont distants des parties verticales 3b des consoles 3, les branches 42 peuvent être fléchies lors de la mise en place du tronçon 2, sans interaction avec les parties 3b.

Il est alors possible de mettre en place un second tronçon 2' comme représenté par la flèche F₅ à la figure 4.

Les éclisses 6 et 6' peuvent alors être mises en place alors que les tronçons 2 et 2' sont disposés bout-à-bout, chaque éclisse étant en appui contre une nervure 21a, 21b ou équivalente d'un tronçon 2 et recouvrant les bords 22a, 23a ou équivalents des côtés 22 et 23 des tronçons 2 et 2'.

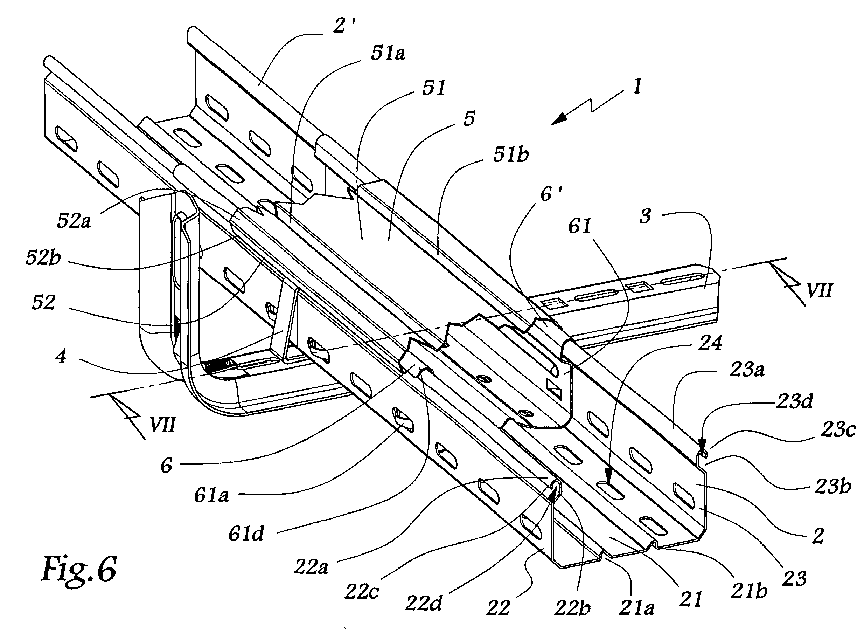

Comme représenté à la figure 6, le couvercle 5 peut alors être disposé sur tout ou partie de la longueur du chemin de câbles 1 en recouvrant les bords 22a et 23a des tronçons 2 et équivalents, les bords 61b et 61'b des éclisses et les extrémités 42a et 43a des branches des étriers.

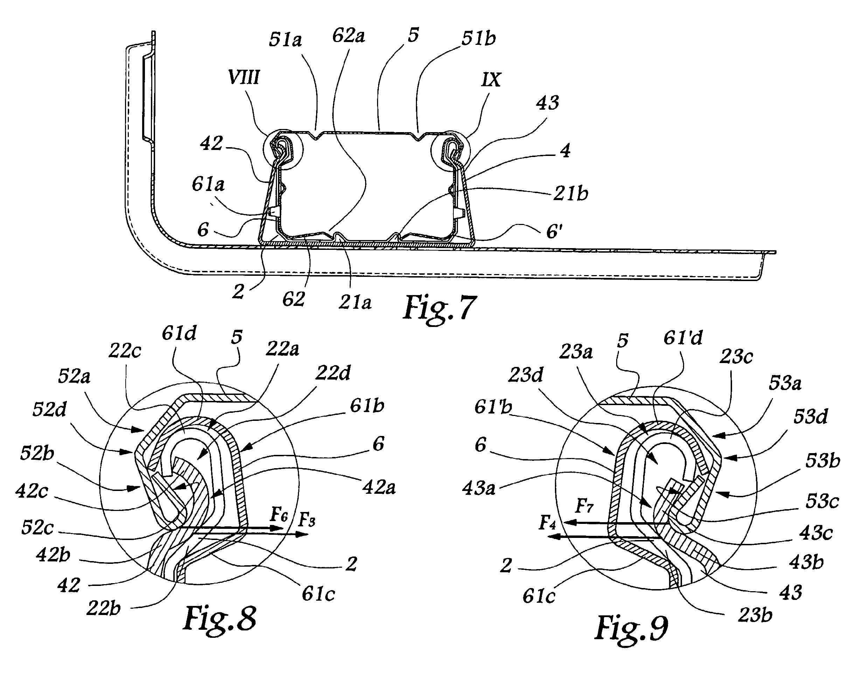

Comme représenté aux figures 7 à 9, les bords 52 et 53 du couvercle 5 recouvrent les éléments 22a, 23a, 61b, 61'b, 42a et 43a et, en particulier masquent les volumes 22d et 23d, ce qui est avantageux sur le plan esthétique. La géométrie des bords 52 et 53 est telle qu'ils viennent en appui contre les zones de courbure 42c et 43c des pattes 42 et 43, ce qui améliore le contact entre le couvercle 5 et l'étrier 4. La géométrie du couvercle 5 peut en outre être choisie de telle sorte qu'il soit apte à exercer un effort de pincement supplémentaire, représenté par les flèches F₆ et F₇ aux figures 8 et 9, contribuant à l'immobilisation du chemin de câbles 1 sur l'étrier 4.

Comme il ressort de la comparaison des figures 8 et 9, la géométrie des extrémités 42a et 43a des branches 42 et 43 est différente. En effet, la zone 42c est globalement en forme de tronc de cylindre à base circulaire et s'étend jusqu'au contact du bord rabattu 22c qu'elle permet d'immobiliser par coincement. Une telle géométrie ne peut pas être utilisée du côté de l'extrémité 43a compte tenu du clipsage mis en oeuvre à la fin de l'étape de pivotement F₂ représentée à la figure 3. La zone 43c est plus courte que la zone 42c, au point qu'elle n'est pas en contact avec le bord rabattu 23c. La géométrie de la zone 43c est compatible avec un glissement du côté 23 contre l'extrémité 43a lors du mouvement de pivotement F₂, alors que la zone 42c sert de zone d'articulation pour ce mouvement de pivotement.

En d'autres termes, la zone 42c est verrouillée dans le bord rabattu 22c, de sorte qu'un retrait du tronçon 2 selon une direction perpendiculaire à la console 3 est impossible. En revanche, la géométrie de la zone 43c permet un retrait du tronçon 2 par pivotement autour de l'extrémité 42a de la branche 42, selon un mouvement inverse à celui représenté par la flèche F₂.

L'invention a été décrite avec des consoles 3 prévues pour être fixées sur des cloisons verticales mais elle s'applique avec tout type de consoles, notamment celles utilisées en plafond ou dans des planchers ou galeries techniques.

## Revendications

1. Procédé d'assemblage d'un chemin de câbles (1) comprenant au moins un tronçon allongé (2, 2') de réception de câbles présentant une section transversale globalement en forme de U, et au moins une console (3) de support de ce tronçon, **caractérisé en ce qu'**il consiste à introduire (F₁) ledit tronçon dans au moins un étrier élastique (4) globalement en forme de U et solidaire de ladite console, en appuyant un côté (22, 23) dudit tronçon sur une branche (42, 43) dudit étrier, et à faire pivoter (F₂) ledit tronçon autour de sa zone d'appui (42a) sur ledit étrier, dans un sens de rapprochement du fond (21) dudit tronçon par rapport à la base (41) dudit étrier.

2. Procédé selon la revendication 1, **caractérisé en ce qu'**il consiste à déformer élastiquement ledit étrier (4), en écartant ses branches (42, 43), par l'introduction et la mise en place (F₁, F₂) dudit tronçon (2).

3. Procédé selon l'une des revendications 1 ou 2, **caractérisé en ce qu'**il consiste à coiffer ledit tronçon (2) avec un couvercle (5) en recouvrant les bords longitudinaux libres (22a, 23a) dudit tronçon (2) et les extrémités libres (42a, 43a) des branches (42, 43) dudit étrier (4) avec les bords longitudinaux (52, 53) dudit couvercle.

4. Procédé selon l'une des revendications 1 à 3, **caractérisé en ce qu'**il consiste à raccorder bout-à-bout deux tronçons allongés (2, 2') en disposant des éclisses (6, 6') de liaison à l'intérieur desdits deux tronçons (2, 2').

5. Ensemble de tronçons allongés (2, 2') formant chemin de câbles (1), lesdits tronçons présentant en section transversale globalement une forme de U, ledit ensemble comprenant au moins une console (3) de support d'au moins un tronçon, **caractérisé en ce que** ladite console supporte un étrier élastique (4) globalement en forme de U, de section interne adaptée à la section transversale externe d'un tel tronçon, ledit étrier étant apte à recevoir (F₁, F₂) et à immobiliser (F₃, F₄) par coopération de formes ledit tronçon en se déformant élastiquement grâce à un écartement de ses branches (42, 43) et **en ce que** ledit étrier forme une zone d'articulation (42c) d'un tronçon (2) lors de sa mise en place dans ledit étrier, ladite zone étant engagée dans un bord rabattu (22c) d'un côté (22) dudit tronçon.

6. Ensemble selon la revendication 5, **caractérisé en ce que** les branches (42, 43) dudit étrier (4) sont pourvues d'extrémités (42a, 43a) présentant une zone (42b, 43b) de courbure vers l'intérieur dudit étrier alors que les bords longitudinaux libres dudit tronçon présentent une zone (22b, 23b) de courbure vers l'intérieur dudit tronçon.

7. Ensemble selon la revendication 6, **caractérisé en ce que** lesdites extrémités (42a, 43a) sont convexes par rapport au volume défini entre lesdites branches (42, 43).

8. Ensemble selon l'une des revendications 5 à 7, **caractérisé en ce qu'**au moins un bord longitudinal libre (22c, 23c) dudit tronçon (2) est rabattu vers l'extérieur et forme une zone (22d, 23d) de réception et d'appui élastique d'une extrémité (42a, 43a) d'une branche (42, 43) dudit étrier (4).

9. Ensemble selon l'une des revendications 5 à 8, **caractérisé en ce qu'**il comprend un couvercle (5) dont les bords longitudinaux (52, 53) coiffent les bords longitudinaux libres (22a, 23a) dudit tronçon (2) et les extrémités (42a, 43a) des branches (42, 43) dudit étrier (4), lesdits bords longitudinaux dudit couvercle étant en appui élastique (F₆, F₇) contre lesdites extrémités.

10. Ensemble selon l'une des revendication 5 à 9, **caractérisé en ce qu'**il comprend des éclisse (6, 6') de liaison bout-à-bout de deux tronçons allongés (2, 2') lesdites éclisses étant aptes à être disposées à l'intérieur desdits deux tronçons et comprenant chacune un bord rabattu (61d, 61'd) apte à coiffer un bord longitudinal libre (22a, 23a) de chacun desdits tronçons.

## Claims

1. Method for the assembly of a cable conduit (1) comprising at least one section (2, 2') for reception of a cable, presenting a transverse section generally in the form of a U, and at least one support shelf (3) for this section, **characterised in that** it consists of introducing (F₁) the said section into at least one elastic stirrup (4) generally in the form of a U and fixed to the said shelf, supporting a side (22, 23) of the said section on a branch (42, 43) of the said stirrup, and making the said section pivot (F₂) round its region of support (42a) on the said stirrup, in a sense to make the base (21) of the said section approach engagement with the base (41) of the stirrup.

2. Method according to claim 1, **characterised in that** it consists of deforming the said stirrup elastically, separating its arms by the introduction and location (F1, F2) of the said section (2).

3. Method according to one of claim 1 or 2, **characterised in that** it consists of putting on said section (2) a lid (5) while covering the longitudinal free margins (22a, 23a) of the section (2) and the free ends (42a, 43a) of the branches (42, 43) of the stirrup (4) with the longitudinal margins (52, 53) of the said lid.

4. Method according to any of claims 1 to 3, **characterised in that** it consists of joining two elongate sections (2, 2') end to end by disposing coupling fishplates (6, 6') inside the said sections (2, 2').

5. Assembly of elongate sections (2. 2') forming a cable conduit (1), the said sections presenting in transverse section generally a form of a U, the said assembly comprising at least one shelf (3) for the support of at least one section, **characterised in that** the said shelf supports an elastic stirrup (4) generally in the form of a U, of internal section conforming to the external transverse section of such a section, the said stirrup being adapted to receive (F₁, F₂) and hold fast (F₃, F₄) by cooperation of form the said section while elastically deforming by virtue of a separation of its arms (42, 43) and **in that** the said stirrup forms a region of articulation (42c) of a section (2) during its positioning in the said stirrup, the said region being engaged by a turned down margin (22c) of one side (22) of the said section.

6. Assembly according to claim 5, **characterised in that** the branches (42, 43) of the said stirrup (4) are provided with ends (42a, 43a) presenting a region (42b, 43b) of curvature towards the interior of the said stirrup whereas the free longitudinal margins of the said section present a region (22b, 23b) of curvature towards the inside of the said section.

7. Assembly according to claim 6, **characterised in that** the said ends (42a, 43a) are convex with respect to the space defined between the said arms (42, 43).

8. Assembly according to any of claims 5 to 7, **characterised in that** at least one free longitudinal margin (22c, 23c) of the said section is turned down towards the outside and forms a region of reception and elastic support of an end (42a, 43a) of an arm (42, 43) of the said stirrup (4).

9. Assembly according to any of claims 5 to 8, **characterised in that** it comprises a lid (5) of which the longitudinal margins (52, 53) cover the free longitudinal margins (22a, 23a) of the said section (2) and the ends (42a, 43a) of the arms (42, 43) of the said stirrup (4), the said longitudinal margins of the said lid elastically pressing (F₆, F₇) against the said ends.

10. Assembly according to any of claims 5 to 9, **characterised in that** it comprises fishplates (6, 6') for joining two elongate sections end to end, the said fishplates being adapted to be disposed on the inside of the said two sections and each comprising a turned down margin (61d, 61'd) adapted to cover a free longitudinal margin (22a, 23a) of each of the said sections.

## Patentansprüche

1. Verfahren zum Zusammenfügen eines Kabelweges (1), mindestens ein lang gestrecktes Teilstück (2, 2') zur Aufnahme von Kabeln, das einen im Ganzen gesehen U-förmigen Querschnitt aufweist, und mindestens eine Konsole (3) zur Abstützung dieses Teilstücks umfassend, **dadurch gekennzeichnet, dass** es darin besteht, das Teilstück in mindestens einen elastischen, im Ganzen gesehen U-förmigen Bügel (4), der mit der Konsole verbunden ist, einzuführen (F₁), indem eine Seite (22, 23) des Teilstücks auf einen Arm (42, 43) des Bügels gedrückt wird, und das Teilstück um seine Abstützzone (42a) auf dem Bügel in eine Richtung des Annäherns des Bodens (21) des Teilstücks in Bezug auf die Basis (41) des Bügels geschwenkt wird.

2. Verfahren nach Anspruch 1, **dadurch gekennzeichnet, dass** es darin besteht, den Bügel (4) elastisch zu verformen, indem seine Arme (42, 43) durch die Einführung und die Instellungbringung (F₁, F₂) des Teilstücks (2) voneinander weg gespreizt werden.

3. Verfahren nach einem der Ansprüche 1 oder 2, **dadurch gekennzeichnet, dass** es darin besteht, das Teilstück (2) mit einem Deckel (5) zu bedecken, indem die freien Längsränder (22a, 23a) des Teilstücks (2) und die freien Enden (42a, 43a) der Arme (42, 43) des Bügels (4) mit den Längsrändern (52, 53) des Deckels überdeckt werden.

4. Verfahren nach einem der Ansprüche 1 bis 3, **dadurch gekennzeichnet, dass** es darin besteht, zwei lang gestreckte Teilstücke (2, 2') hintereinander liegend zu verbinden, indem Verbindungsschienen (6, 6') im Inneren der zwei Teilstücke (2, 2') angeordnet werden.

5. Anordnung aus lang gestreckten Teilstücken (2, 2'), die einen Kabelweg (1) bilden, wobei die Teilstücke einen im Ganzen gesehen U-förmigen Querschnitt aufweisen und die Anordnung mindestens eine Konsole (3) zur Abstützung mindestens eines Teilstücks umfasst, **dadurch gekennzeichnet, dass** die Konsole einen elastischen, im Ganzen gesehen U-förmigen Bügel (4) trägt, der mit seinem Innenbereich an den äußeren Querschnitt eines solchen Teilstücks angepasst ist, wobei der Bügel geeignet ist, das Teilstück aufzunehmen (F₁, F₂) und durch Formenschluss (F₃, F₄) festzulegen, indem er sich elastisch durch ein Wegspreizen seiner Arme (42, 43) verformt und dass der Bügel eine Anlenkzone (42c) für ein Teilstück (2) bei seiner Instellungbringung in dem Bügel bildet, wobei die Zone in einen umgebogenen Rand (22c) einer Seite (22) des Teilstücks eingreift.

6. Anordnung nach Anspruch 5, **dadurch gekennzeichnet, dass** die Arme (42, 43) des Bügels (4) mit Enden (42a, 43a) versehen sind, die eine in Bezug auf den Bügel nach innen gerichtete Krümmungszone (42b, 43b) aufweisen, während die freien Längsränder des Teilstücks eine in Bezug auf das Teilstück nach innen gerichtete Krümmungszone (22b, 23b) aufweisen.

7. Anordnung nach Anspruch 6, **dadurch gekennzeichnet, dass** die Enden (42a, 43a) in Bezug auf das zwischen den Armen (42, 43) definierte Volumen konvex sind.

8. Anordnung nach einem der Ansprüche 5 bis 7, **dadurch gekennzeichnet, dass** mindestens ein freier Längsrand (22c, 23c) des Teilstücks (2) nach außen umgebogen ist und eine Zone (22d, 23d) der Aufnahme und des elastischen Abstützens eines Endes (42a, 43a) eines Armes (42, 43) des Bügels (4) bildet.

9. Anordnung nach einem der Ansprüche 5 bis 8, **dadurch gekennzeichnet, dass** sie einen Deckel (5) umfasst, dessen Längsränder (52, 53) die freien Längsränder (22a, 23a) des Teilstücks (2) und der Enden (42a, 43a) der Arme (42, 43) des Bügels (4) überdecken, wobei die Längsränder des Deckels in elastischer Abstützung (F₆, F₇) gegen die Enden ist.

10. Anordnung nach einem der Ansprüche 5 bis 9, **dadurch gekennzeichnet, dass** sie Schienen (6, 6') zur hintereinander liegenden Verbindung von zwei lang gestreckten Teilstücken (2, 2') umfasst, wo bei die Schienen geeignet sind, im Inneren der zwei Teilstücke angeordnet zu werden und jede einen umgebogenen Rand (61d, 61'd) umfasst, der geeignet ist, einen freien Längsrand (22a, 23a) von jedem der Teilstücke zu überdecken.
